# EUROPEAN PATENT SPECIFICATION

(11) **EP 1 491 362 B1**
(45) Date of publication and mention of the grant of the patent: **09.04.2008**
(21) Application number: 03425419.3
(22) Date of filing: 26.06.2003
(51) Int. Cl.: B60B 21/06

(54) **Lightened rim for a bicycle wheel and method for manufacturing such a rim**
Leichter gemachte Fahrradfelge und Verfahren zur Herstellung einer solchen Felge
Jante allégée pour cycle et procédé de fabrication d'une telle jante

(43) Date of publication of application: 29.12.2004
(73) Proprietor: CAMPAGNOLO S.R.L., 36100 Vicenza (VI) (IT)
(72) Inventor: Passarotto, Maurizio, 45100 Rovigo (IT)
(74) Representative: Castiglia, Paolo

(56) References cited:
- EP-A- 0 715 001
- EP-A- 1 314 579
- FR-A- 833 629
- FR-A- 2 765 150
- PATENT ABSTRACTS OF JAPAN vol. 012, no. 157 (M-696), 13 May 1988 (1988-05-13) & JP 62 275801 A (TORAY IND INC), 30 November 1987 (1987-11-30)

## Description

The present invention relates to a lightened rim for a bicycle wheel and to a method for manufacturing such a rim.

It is known that bicycle wheels are formed by a peripheral crown or rim, a central hub and a plurality of spokes which connect the hub to the rim.

Rims are generally made up of two side walls connected or jointed at one end by a circumferentially inner wall or lower bridge and at an intermediate point by a circumferentially outer wall or upper bridge, so as to have a substantially upturned A-shaped cross-section. The circumferentially outer portions of the side walls, typically equipped with an outer edge, form a channel for coupling with the tyre, whereas the circumferentially inner portions of the side walls form, together with the lower bridge and the upper bridge, a chamber for the attachment of the spokes.

In the lower bridge or in the inner side walls some seats are formed for the attachment of the spokes. The seats generally consist of openings or smooth holes or threaded holes, depending on the method used for the attachment of the spokes.

Rims of this type are manufactured by extrusion of a bar of an aluminium alloy. The bar is shaped as a circle typically by calendering and its top ends are jointed by welding.

In the field of bicycles, especially in the field of racing bicycles, research is aimed at finding solutions which lead to an ever greater reduction in weight of the wheel, without however decreasing its structural strength, static and dynamic stability. Moreover, research is also aimed at finding solutions which allow simple and less expensive processings and aesthetically pleasing and original shapes.

It is known that the greater tensions in the rim lay in the spoke attachment zones and that these tensions progressively decrease as one moves away from such zones. In the light of the above, it is also known that, in order to realize a wheel of reduced weight, it is necessary to have a rim with a greater thickness where the tensions are greater, i.e. in the spoke attachment zones, and a lower thickness where the tensions are lower, i.e. in the zones between the spoke attachments or infra-spoke zones.

A first known solution of such rims is described in US 452.649, a second solution in patent application PCT WO93/09963, a third solution in European patent EP 715,001, a fourth solution in European patent EP 1.084.868 and a fifth solution in patent application JP 62 275801.

In particular, PCT WO93/09963 obtains the two different thicknesses of the rim (in the spoke attachment zones and in the infra-spoke zones) starting from a rim having a lower bridge with the desired minimum thickness and thickening the spoke attachment zones with a drawing mechanical process. On the other hand, European patents EP 715.001 and EP 1.084.8 obtain the two thicknesses starting from a rim having a thickness of the lower bridge substantially equal to that desired in the spoke attachment zones and then removing (by chemical processing in EP 715.001 and by mechanical processing in EP 1.084.868) material in the infra-spoke zones of the lower bridge.

The rim shown in JP 62 275801 is instead obtained starting from a cylindrical core member, around which a plurality of cylindrical wires are arranged, each of said wires having reduced diameter portions formed therein at intervals of a predetermined pitch, an elastic tube being provided around said plurality of wires, said tube thus having spaced zones with two different external diameters. The rim is then obtained winding on the outer peripheral surface of the elastic tube a prepreg prepared by impregnating reinforcement fibres with a resin, so that the rim has spaced zones with two different thicknesses, defining the spoke attachment zones and the infra-spoke zones, respectively.

In all the known solutions, the variations in thickness between the spoke attachment zones and the infra-spoke zones have a transition zone with a substantially curvilinear progression and different radii of curvature which range from a minimum of a few millimetres in EP 715.001 to a maximum of 100 mm in EP 1.084.868. As explained in EP 1.084.868, the progression of such a transition zone is "required" because the tensions introduced by the spokes in the rim are distributed in the rim itself with gradual progressions and "sudden" variations in thickness would lead to concentrations of tensions in the rim and, therefore, to its breaking generally by fatigue.

Moreover, such a requirement is common knowledge to people skilled in the art, who well know that in order to distribute tensions, it is necessary to provide soft and gradual variations.

A drawback of the known solutions is that the curvilinear progression of the variation in thickness does not allow a consistent removal of material, thus leading to a not completely satisfactory reduction in weight. Moreover, such a curvilinear progression also defines the shape that must be given to the variation in thickness.

After in-depth studies and many laboratory tests, the Applicant, with great surprise, has noticed that the tensions of the spokes can be well distributed in the rim also with very sudden variations in thickness and with very small transition zones and that the weight of the rim can be reduced more than in known solutions, without however renouncing to the structural strength and to the static and dynamic stability of the wheel. Moreover, very sudden variations in thickness allow different processing techniques to be used and give a wide freedom of choice on the "form" to be given to such variations in thickness, also with undoubted aesthetic advantages.

A first aim of the invention is to provide a rim for a bicycle wheel formed of an annular profile, the section of which comprises a lower bridge and side walls, the lower bridge or the side walls having spoke attachment zones along the annular extension, wherein spoke attachment seats are formed, having a predetermined thickness and infra-spoke zones, placed between said spoke attachment zones, having a lower thickness than the thickness of said spoke attachment zones, characterised in that one of the increase in thickness between an infra-spoke zone and the adjacent spoke attachment zone or the decrease in thickness between a spoke attachment zone and the adjacent infra-spoke zone, presents a very sharp progression and a sharp corner, said sharp corner having a jointing zone having a radius of curvature equal to or less than 0.4 mm.

According to a preferred embodiment, both the increase of thickness between the infra-spoke zones and the spoke attachment zones, and the decrease of thickness between the spoke attachment zones and the infra-spoke zones, present a very sharp progression and a sharp corner.

In other words, advantageously, the transition zone between the two thicknesses is reduced to the minimum and substantially eliminated.

The sharp corner is preferably defined by two segments which intersect with each other, wherein the first segment is substantially curvilinear, following the radius of curvature of the rim and the second segment is rectilinear, and they define between them a substantial right angle. Moreover, the two segments intersect with a radius of curvature preferably equal to or less than 0.2 mm.

A second aim of the invention is a method for realizing zones of decreased thickness in the lower bridge or in the side walls of a rim of a bicycle wheel having an annular profile, as recited in claim 24.

The rotary tool used in said method has preferably a substantially cylindrical shape and realises decreases and increases in thicknesses of the lower bridge with right-angled corners.

Further characteristics and advantages of the invention shall become clearer from the description of some preferred embodiments, given with reference to the attached drawings, where:
- fig. 1 shows a longitudinal section of a segment of the rim of the invention for wheels with an inner tube;
- fig. 1A shows an enlarged detail of fig. 1;
- figs. 1B and 1C show the enlarged detail of fig. 1A according to variant embodiments of the rim of the invention;
- fig. 2 shows a cross-section of the rim of the invention according to the plane II°-II° of fig. 1;
- fig. 3 shows a longitudinal section of a portion of rim of a variant of the invention for tubeless wheels;
- fig. 4 shows a variant embodiment of fig. 1;
- fig. 5 shows another variant embodiment of fig. 1;
- fig. 6 shows a view from below of the segment of rim of fig. 1;
- fig. 7 shows a variant embodiment of fig. 6;
- fig. 8 shows another variant embodiment of fig. 6;
- fig. 9 shows a side view of a wheel using the rim of the invention;
- fig. 10 shows a side view of another type of wheel using the rim of the invention;
- figures 11 to 13 schematically show some steps of a method for manufacturing the rim according to the invention;
- figures 14 and 15 show two different types of tool used to obtain different types of rim according to the method of the invention shown in figures 11 to 13.

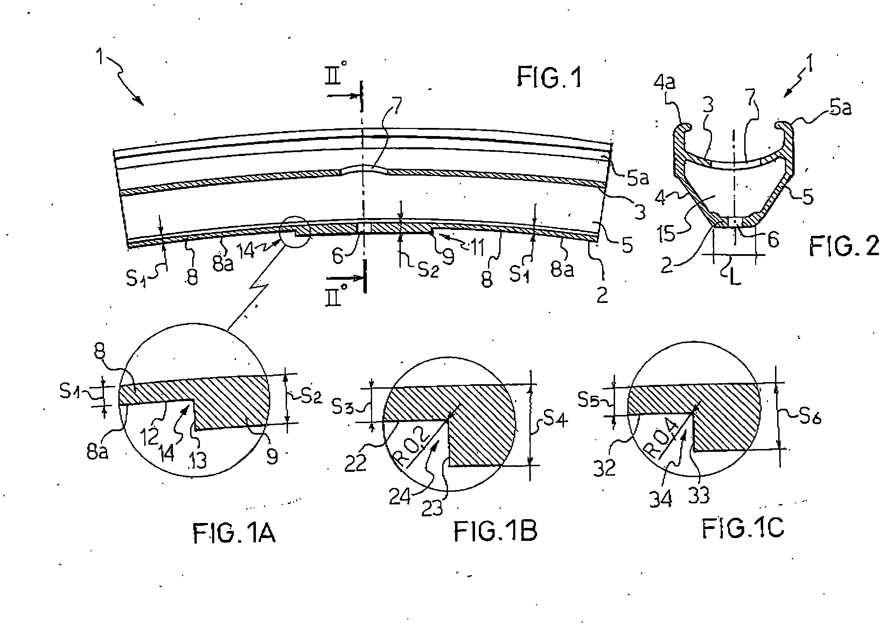

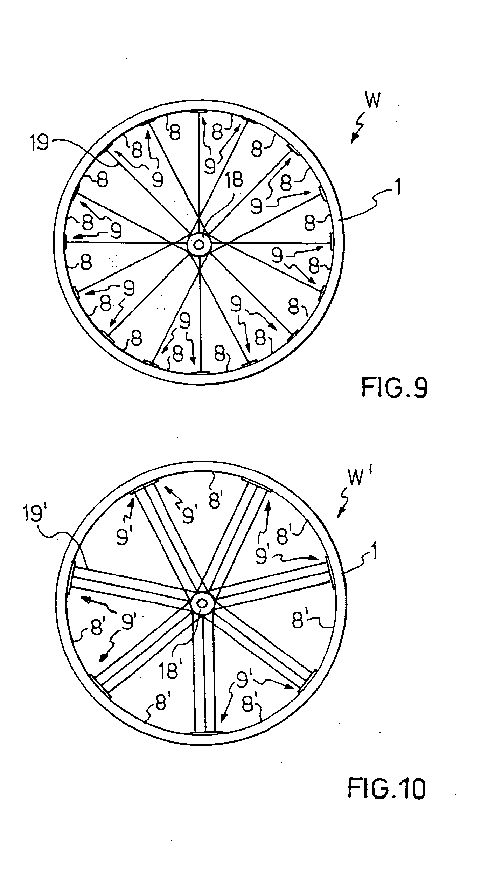

The rim of the invention is manufactured by extrusion of a bar of an aluminium alloy. The bar is shaped as a circle typically by calendering and its top ends are jointed by welding. The rim, wholly indicated with 1, is shown in figures 9 and 10 where it is applied to two bicycle wheels W, W' with different spoke arrangements. The bicycle wheels W, W', as already said, are formed by a peripheral crown with an annular profile or rim 1, a central hub 18, 18' and a plurality of spokes 19, 19' which connect the hub 18, 18' to the rim 1. Figure 1 shows a segment of such a rim 1 longitudinally sectioned, whereas fig. 2 shows a cross-section of it.

The rim 1, as it can be seen more clearly in the section view of fig. 2, is made up of two side walls 4, 5 connected at one end by a circumferentially inner wall 2, known as lower bridge, and at an intermediate point by a circumferentially outer wall 3, also known as upper bridge, and has a substantially upturned A-shaped cross-section. The circumferentially outer portions of the side walls 4, 5 are equipped with an outer edge 4a, 5a which forms a channel for coupling with the tyre, whereas the circumferentially inner portions of the side walls 4, 5 form, with the lower bridge 2 and the upper bridge 3, a chamber 15 for the attachment of the spokes.

The solution here shown refers to a rim with lower bridge 2 and upper bridge 3, commonly referred to as "double bridge", but what will be described can also be applied to rims with open section, i.e. without upper bridge, with a substantially U-shaped form.

The section of the rim 1, as stated, has a single spoke attachment chamber 15 but two or more chambers can be provided in different variants, obtained through one or more partition walls, that extend parallel or transverserly to the upper bridge. Each wall (upper bridge, lower bridge, side walls and partition walls), moreover, can be shaped in various ways, obtaining a cross-section of the rim which can be substantially complex.

The lower bridge 2 presents along the annular extension of the rim 1 spoke attachment zones 9 of constant thickness S2 equal to about 1.8 mm where through holes 6 are formed for the application of the spokes. To make easier the attachment of the spokes, on the upper bridge 3 a through hole 7 is formed with a diameter greater than the diameter of the hole 6 of the lower bridge 2 and radially aligned with it. Such a construction makes easier the assembly operations of the spokes during the manufacturing of the wheel. The hole 7 of the upper bridge 3, indeed, allows the introduction of a nut or of a locking nipple which engages on the threaded head of the spokes which are inserted radially from the centre of the rim into the hole 6 of the lower bridge 2. The size of the hole 7, moreover, allows the introduction of the head of a manoeuvring tool which screws the nut or the nipple into the head of the spoke. The lower bridge 2 also presents, along the annular extension of the rim 1 and placed between the spoke attachment zones 9, infra-spoke zones 8 of substantially constant thickness S1 lower than the thickness S2 of the spoke attachment zones 9, and equal to about 0.8 mm. The lower thickness of the infra-spoke zones 8, with respect to the thickness of the spoke attachment zones 9, allows the weight of the rim 1 and therefore of the wheel W to be reduced to the minimum. The reduction in thickness does not, however, decrease the structural strength, the static stability and the dynamic stability of the wheels since this reduction is realised outside the zones where the tensions are greater, that is the spoke attachment zones 9. These zones, indeed, have a thickness S2 which is sufficient to ensure the structural strength towards the tensions caused in the rim by the spokes.

The thicknesses S1 and S2 in the shown embodiment are substantially uniform along the annular extension of the rim, but in different embodiments a variation thereof can be foreseen to define surfaces with a slightly concave or convex curvilinear profile.

According to the invention, the increase in thickness between the infra-spoke zone 8 and the spoke attachment zone 9, better shown in the enlarged detail of fig. 1A, has a very sharp progression and has a sharp corner 14. In the same way, the decrease in thickness between the spoke attachment zone 9 and the infra-spoke zone 8, also has a very sharp progression and has a sharp corner 11. For such a decrease in thickness the enlarged detail has not been shown since it mirrors the increase in thickness shown in fig. 1A.

More specifically, the increase in thickness is defined by a broken line consisting of a first curvilinear portion 12 having a radius of curvature substantially equal to the radius of the lower bridge 2 of the rim 1 or, in an alternative solution, of a rectilinear portion substantially tangent to the inner surface 8a of the infra-spoke zone 8, of a second rectilinear portion 13 substantially perpendicular to the first portion 12 and of a substantial right-angle or sharp corner 14. The increase and decrease in thickness substantially have, therefore, a "stepped" shape and are therefore very sharp, substantially eliminating the transition zone between the two different thicknesses. The angle formed between the two portions 12 and 13 does not necessarily have to be 90°, but can be slightly more or less than 90°. Moreover, the first portion 12 and the second portion 13 can have a slight concavity or convexity, or any combination between a rectilinear, concave or convex shape.

As it can be seen from fig. 1A, the first portion 12 and the second portion 13 perfectly intersect with each other forming an ideal sharp corner 14.

However, as known, whatever processing technique does not allow perfectly ideal intersection zones to be obtained.

A first possible configuration that can be obtained with the processing techniques known today is shown in the enlarged detail of fig. 1C, where the intersection zone, or sharp corner 34 between the first portion 32 and the second portion 33 has a radius of curvature of 0.4 mm.

A second configuration is shown in the enlarged detail of fig. 1B, where the intersection zone, or sharp corner 24 between the first portion 22 and the second portion 23 has a radius of curvature of 0.2 mm.

Throughout the present application, "sharp corner" means not only an ideal intersection zone between the first portion 12, 22, 32 and the second portion 13, 23, 33 but an intersection zone preferably having a radius of curvature equal to or less than 0.4 mm and even more preferably having a radius of curvature equal to or less than 0.2 mm.

What has been stated is, of course, also valid for the decrease in thickness between the spoke attachment zones 9 and the infra-spoke zones 8.

Figs. 1B and 1C also show variants with respect to the thicknesses of the spoke attachment 9 and infra-spokes 8 zones. In fig. 1B a rim is shown having a lower bridge with a thickness S4 in the spoke attachment zone of 2.9 mm and a thickness S3 in the infra-spoke zone of 1.2 mm, whereas in fig. 1C a rim is shown having a lower bridge with a thickness S6 in the spoke attachment zone of 2.3 mm and a thickness S5 in the infra-spoke zone of 1 mm.

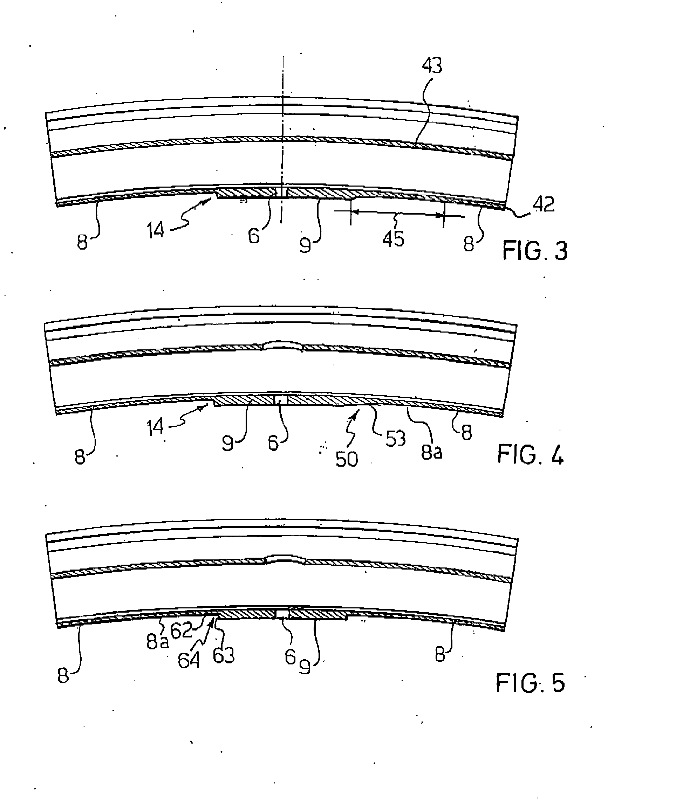

In fig. 3 a segment of a variant of the rim of the invention is shown, where the upper bridge 43 is without holes and makes the rim suitable for being used in tubeless wheels. In fact, the absence of holes in the upper bridge, as known, allows an airtight tubular chamber to be created, in which pressurised air is pumped, between the tyre and the upper bridge 43. In this solution the holes 6 in the lower bridge 42 for the attachment of the spokes besides being smooth, can also be threaded. The lower bridge 42 has an increase in thickness between the infra-spoke zone 8 and the spoke attachment zone 9 with a very sharp progression and with a sharp corner 14 of the type shown in fig. 1. The lower bridge 42 also has a decrease in thickness between the spoke attachment zone 9 and the infra-spoke zone 8 having a curvilinear gradual progression which extends for a substantial portion 45 along the annular extension of the rim 1.

Fig. 4 shows a segment of another variant embodiment of the rim for wheels with an inner tube which differs from the one described and shown in fig. 3 in that the decrease in thickness 50 between the spoke attachment zone 9 and the infra-spoke zone 8 has a rectilinear gradual progression which extends for a substantial portion 53 along the annular extension of the rim 1.

With reference to figs. 3 and 4, it is clear that also dual configurations can be provided, wherein the increase in thickness has a curvilinear gradual progression or rectilinear gradual progression and the decrease in thickness has a very sharp progression and a sharp corner.

In fig. 5 a segment of rim of a further variant embodiment of the invention is shown in which an alternative embodiment of the increase in thickness from the infra-spoke zone 8 to the spoke attachment zone 9 and of the decrease in thickness from the spoke attachment zone 9 to the infra-spoke zone 8 is shown. The increase in thickness, in this case, is defined by a broken line consisting of a first rectilinear portion 62 substantially tangent to the inner surface 8a of the infra-spoke zone 8, a second rectilinear portion 63, substantially at 60° with respect to the first portion 62 and an undercut acute angle or sharp corner 64 of about 60°.

It is clear that 60° is only one of the many possible undercut angle values and that it can have bigger or smaller values. Moreover, the sharp corner 64 has a radius of curvature preferably equal to or less than 0.4 mm and even more preferably equal to or less than 0.2 mm.

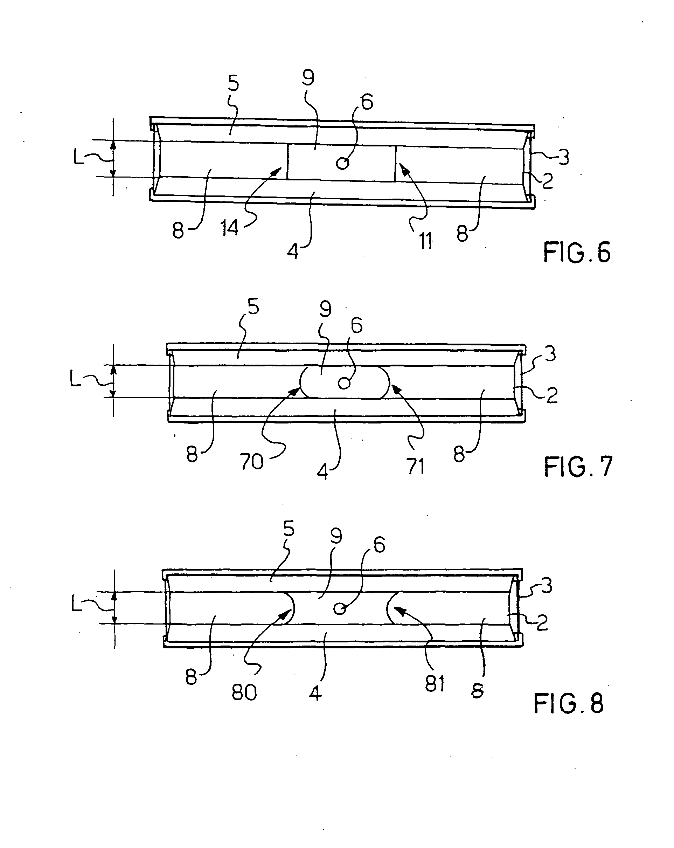

Fig. 6 shows a view from the inside of the segment of rim 1 of fig. 1 which emphasizes the "shape" or progression, along the width L of the lower bridge 2, of the increase in thickness between the infra-spoke zone 8 and the spoke attachment zone 9 and of the decrease in thickness between the spoke attachment zone 9 and the infra-spoke zone 8. Such progressions 14 and 11 are symmetrical with respect to the spoke attachment hole 6 and extend along rectilinear portions substantially perpendicular to the side surfaces 4, 5 of the rim 1. In different embodiments, not shown, such rectilinear portions can be tilted by the same angle or by different angles with respect to the side surfaces 4 and 5 in order to satisfy particular aesthetic or functional requirements.

In figure 7 the segment of rim of the invention is shown in which the progressions of the variations in thickness 70 and 71, along the width L of the lower bridge 2, are symmetrical with respect to the hole 6 and consist of an arc of circumference with concavity facing towards the hole 6 itself.

In an alternative embodiment, not shown, the arcs of circle can be moved closer to each other until a single circle is defined around the hole 6.

In fig. 8 the segment of rim of the invention is shown in which the progressions of the variations in thickness 80 and 81, along the width L of the lower bridge 2, are symmetrical with respect to the hole 6 and consist of arcs of circumference with concavity facing towards the infra-spoke zones 8.

It is clear that the progressions 14, 11; 70, 71 and 80, 81 of the variations in thickness can have different shapes from those shown. For example, they may not be symmetrical, or else the curvilinear portions could be elliptical or parabolic or else be formed by any combination of rectilinear and curvilinear portions.

In the examples described, moreover, the variations in thickness with very sharp progression and with a sharp corner extend for the whole width L of the lower bridge 2. In different embodiments, such variations could extend for a part of the width L of the lower bridge 2, whereas the remaining part could have a curvilinear or rectilinear gradual progression, as shown in figures 3 and 4.

In fig. 9 a wheel W is shown using the rim 1 of the invention according to the characteristics described and illustrated with reference to figures 1 to 8. The wheel W has sixteen spokes 19 equally distributed along the circular extension of the lower bridge 2 and connected thereto at respective spoke attachment zones 9.

In fig. 10 another wheel W' is shown using a rim 1 realized according to the invention, in which seven attachment zones 9' are defined for twenty-one spokes 19' grouped in triads defining seven triplets of spokes. The increase in thickness between the infra-spoke zone 8' and the spoke attachment zone 9' and the decrease in thickness between the spoke attachment zone 9' and the infra-spoke zone 8' is of the type described and illustrated with reference to figures 1 to 8.

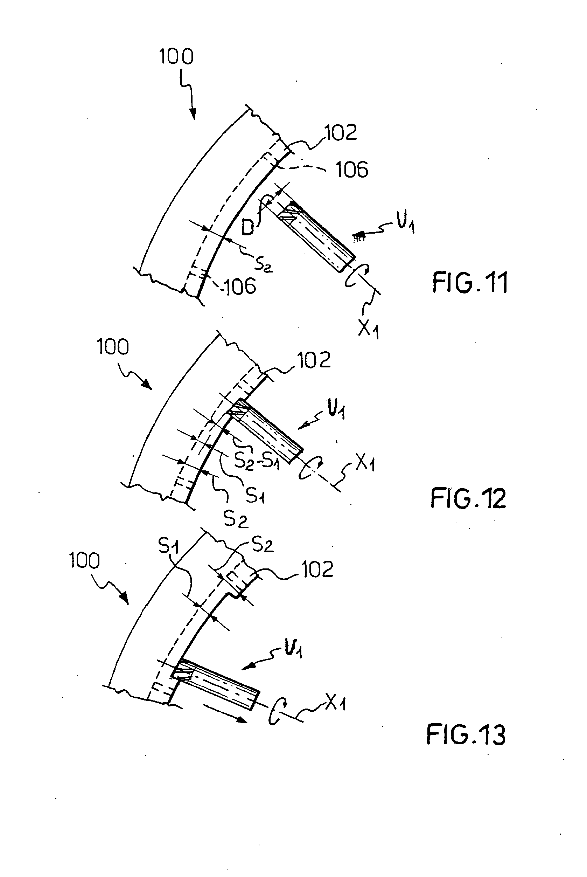

A first method for manufacturing a rim according to the invention is described with reference to figures 11, 12 and 13. Such a method substantially foresees the use of a technique for removing material through by means of machine tools driven according to one or more moving axes.

The rim on which the removal is carried out can consist of any material, like for example aluminium and its alloys or composite materials consisting of structural fibres incorporated in a matrix of polymeric material, such as carbon fibre.

In fig. 11 a portion of rim 100 obtained according to one of the known techniques is shown, in which the lower bridge 102 has substantially constant thickness S2 corresponding to the desired final thickness for the spoke attachment zones. In the rim 100 the spoke attachment holes 106 are highlighted, which are formed, for example, through drilling. The holes 106 could also be formed after the steps of the process which shall be described.

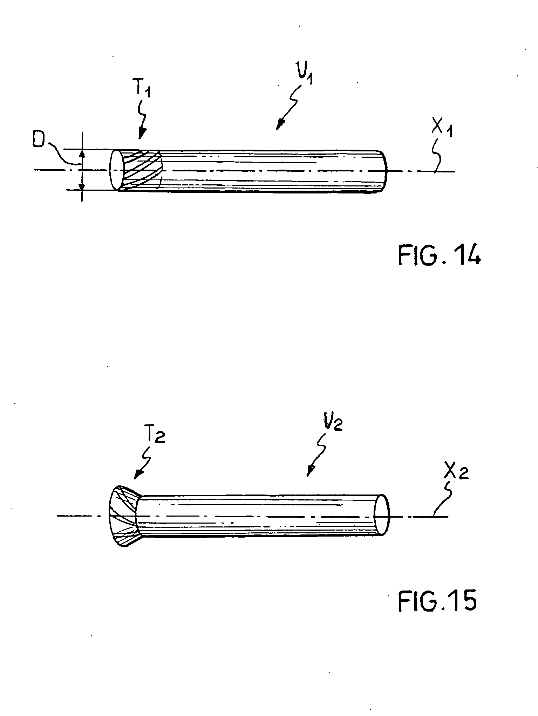

The described method foresees the use of a rotary tool U1, shown enlarged in fig. 14, consisting of an end milling cutter with a cylindrical head T1 equipped with cutting edges. Such a head T1 has a sharp edge profile wherein, by sharp edge, an industrially achievable radiused angle, i.e. having a radius of curvature in the order of 0.4 mm or more preferably in the order of 0.2 mm, is meant.

In order to make the explanation easier, the operating head of the machine tool on which the milling cutter is mounted is not represented in the description of the method.

The rotary milling cutter U1, as shown in fig. 11, is placed with its rotational axis X1 in a substantially radial position on the plane defined by the rim 100.

As it can be seen in fig. 12, the milling cutter U1 is moved in the radial direction along the axis X towards the rim 100 removing the material of the lower bridge 102 for a depth equal to the value given by the difference in thicknesses S2 and S1. The milling cutter U1 is thus moved along an arc of circumference from the starting position of fig. 12 to the end position of fig. 13 removing the material from the lower bridge 102 through the cutting edges arranged on the side surface of the head T1. The milling cutter U1 is then retracted towards the centre of the rim 100 and rotated towards a subsequent infra-spoke position for the subsequent removal of material along the lower bridge 102.

It is clear that in a variant of the method it can be foreseen to move the rim 100 with respect to the rotary milling cutter U1.

Through the just described method, variations in thickness are obtained in the lower bridge having the shape shown in fig. 1. Moreover, if the diameter D of the milling cutter U1 is greater than the width L of the lower bridge 102, a rim is obtained with variations in thickness along the width L of the lower bridge with a single step and having a shape as shown in fig. 8.

By controlling the advancing depth of the tool along the axis X towards the lower bridge 102 it is possible to manufacture rims with different combinations of thicknesses S1, S2; S3, S4 and S5, S6, as described with reference to figures 1A, 1B and 1C.

If one wishes to obtain a different shape of the variations in thickness along the width L of the lower bridge 2, for example like those of fig. 6 and 7, it shall be necessary to move the milling cutter U1 according to further axes by using known techniques of interpolation of the axes.

For example, to obtain the progressions 14 and 11 of fig. 6, the milling cutter U1 must also be moved perpendicularly to the plane of the rim. With reference to the position of fig. 12, the milling cutter U1 must, indeed, be translated with alternating movement in the direction perpendicular to the sheet. If one wishes to obtain the progressions 70 and 71 of fig. 7, from the position represented in fig. 12, the milling cutter U1 must be moved simultaneously along the axis perpendicular to the plane of the rim and along an arc of circumference on the plane of the rim, with alternating progression, realising a curved interpolated trajectory.

By using a milling cutter U2 with a bevelled frusto-conical cutting head T2 of the type shown in fig. 15, it is possible to obtain a rim with variations in thickness of undercut of the type shown in fig. 5. To obtain the undercut, the milling cutter U2 is initially arranged with its axis X2 parallel to the plane of the rim but in lateral and outer position. Then, the milling cutter U2 is translated towards the rim keeping its axis parallel to the plane of the rim and removing the material with the cutting side surfaces of the head T2. The milling cutter U2 is then moved along an arc of circumference from the starting position to the end position by removing the material from the lower bridge through the cutting edges placed on the side surface of the head T2. The milling cutter U2 is then extracted laterally with respect to the plane of the rim thus realising the desired undercut.

It is clear that variations in thickness like those described for the lower bridge can also be obtained on the side walls of the rim, all that one needs is that the tools T1 or T2 be moved on planes perpendicular to such walls.

A second processing method which can be used to manufacture the rim of the invention, in one of its foreseen embodiments, requires the use of the technique of electron discharge machining. In such a case, starting from a rim 100 of the type described and shown in fig. 11, subsequent operations of removal of material are carried out in the infra-spoke zones through electron discharge machining, which, as known, allows high precision to be obtained,

Other methods can be used to obtain the described geometries, also taking into account the technology and the material used to manufacture the rim itself.

In particular, should the rim be obtained by moulding, it may be useful to realise the desired sections and profiles directly by acting on the shape of the mould. In the case, for example, of rims manufactured with layers of carbon fibre, it can be foreseen that the spoke attachment zones be obtained through the application in such zones of a number of layers of carbon fibre greater than in the infra-spoke zones and that the mould also has a shape matching and corresponding to the sharp edge profiles to be obtained.

In a similar way, the desired result can be obtained if an injection moulding technique is used, in which case the shape of the mould with sharp edge profiles allows the desired shapings to be obtained when the injected material fills up the cavity with corners defined by it.

## Claims

1. Rim (1) for a bicycle wheel (W; W') formed of an annular profile, the section of which comprises a lower bridge (2; 42) and side walls (4, 5), the lower bridge (2; 42) or the side walls (4, 5) having, along the annular extension, spoke attachment zones (9), in which seats (6) are arranged for the attachment of spokes (19; 19'), having a predetermined thickness (S2; S4; S6) and infra-spoke zones (8), placed between said spoke attachment zones (9), having a thickness (S1; S2; S3) lower than the thickness (S2; S4; S6) of said spoke attachment zones (9), **characterised in that** one of the increase in thickness between an infra-spoke zone (8) and the adjacent spoke attachment zone (9) or the decrease in thickness between a spoke attachment zone (9) and the adjacent infra-spoke zone (8) has a very sharp progression and a sharp corner (14, 11; 24; 34; 64), said sharp corner (14, 11; 24; 34; 64) having a jointing zone having a radius of curvature equal to or less than 0.4 mm.

2. Rim (1) according to claim 1, **characterised in that** both the increase in thickness between said infra-spoke zone (8) and said adjacent spoke attachment zone (9) and the reduction in thickness between said spoke attachment zone (9) and said adjacent infra-spoke zone (8) have a very sharp progression and a sharp corner (14, 11; 24; 34; 64).

3. Rim (1) according to claim 1, **characterised in that** said spoke attachment zone (9) and said infra-spoke zone (8) belong to said lower bridge (2; 42).

4. Rim (1) according to claim 1, **characterised in that** said sharp corner (14, 11; 24; 34) is defined by a first portion (12; 22; 32; 62) belonging to the inner surface (8a) of said infra-spoke zone (8) and by a second portion (13; 23; 33; 63) which intersects said first portion (12; 22; 32; 62).

5. Rim (1) according to claim 1 or 4, **characterised in that** said sharp corner (14, 11; 24; 64) has a jointing zone having a radius of curvature equal to or less than 0.2 mm.

6. Rim (1) according to claim 4, **characterised in that** said first portion (12; 22; 32; 62) or said second portion (13; 23; 33; 63) is rectilinear.

7. Rim (1) according to claim 4, **characterised in that** said first portion (12; 22; 32; 62) or said second portion (13; 23; 33; 63) is curvilinear.

8. Rim (1) according to claim 4, **characterised in that** said first portion (12; 22; 32; 62) is curvilinear with a radius of curvature substantially equal to the radius of the lower bridge of the rim and said second portion (13; 23; 33; 63) is rectilinear.

9. Rim (1) according to claim 4, **characterised in that** said second portion (13; 23; 33) forms with said first portion (12; 22; 32) a substantially right angle.

10. Rim (1) according to claim 4, **characterised in that** said second portion (63) forms with said first portion (62) an acute angle.

11. Rim (1) according to claim 3, **characterised in that** said increase in thickness or said reduction in thickness is present on at least part of the width (L) of said lower bridge (2; 42).

12. Rim (1) according to claim 3, **characterised in that** said increase in thickness or said reduction in thickness is present on the whole width (L) of said lower bridge (2; 42).

13. Rim (1) according to claim 1, **characterised in that** the reduction in thickness between said spoke attachment zone (9) and the adjacent infra-spoke zone (8) or the increase in thickness between said infra-spoke zone (9) and the adjacent spoke attachment zone (8) has a gradual progression.

14. Rim (1) according to claim 3, **characterised in that** said increase in thickness or said reduction in thickness extends along the width (L) of said lower bridge (2; 42) according to rectilinear portions (14, 11).

15. Rim (1) according to claim 14, **characterised in that** said rectilinear portions (14, 11) are substantially perpendicular to said side walls (4, 5) of the rim (1).

16. Rim (1) according to claim 14, **characterised in that** said rectilinear portions are oblique with respect to said side walls (4, 5) of the rim (1).

17. Rim (1) according to claim 3, **characterised in that** said increase in thickness or said reduction in thickness extends along the width (L) of said lower bridge (2; 42) according to curvilinear portions (70, 71; 80, 81).

18. Rim (1) according to claim 17, **characterised in that** said curvilinear portions are concave (70, 71) with respect to said seat (6).

19. Rim (1) according to claim 17, **characterised in that** said curvilinear portions are convex (80, 81) with respect to said seat (6).

20. Rim (1) according to claim 1, **characterised in that** it also comprises an upper bridge (3; 43) with annular extension connected to said side walls (4, 5) and suitable for defining, with said side walls (4, 5) and said lower bridge (2; 42), at least one chamber (15) for the attachment of the spokes (19; 19').

21. Rim (1) according to one of the previous claims, **characterised in that** said infra-spoke zones (8) with reduced thickness are obtained through removal of material with machine tools.

22. Rim (1) according to claim 21, **characterised in that** said machine tools are milling cutters.

23. Bicycle wheel (W; W') comprising a rim (1) manufactured according to any one of the previous claims.

24. Method for forming zones (8) of reduced thickness (S1; S3; S5) in the lower bridge (2) or in the side walls (4, 5) of a rim (1; 100) of a bicycle wheel (W; W') having an annular profile, **characterised in that** it comprises the following steps:
a) rotating the cutting head (T1; T2) with a sharp edge profile, of a tool (U1; U2);
b) moving said cutting head (T1; T2) towards said lower bridge (2; 102) or towards said side wall (4, 5) according to a plane substantially perpendicular to its surface;
c) moving said cutting head (T1; T2) along an annular direction and removing material;
d) moving said cutting head (T1; T2) away from said lower bridge (2; 102) or said side wall (4, 5);
said steps defining, on the surface of said lower bridge (2; 102) or said side wall (4, 5), at least one sharp corner (14, 11; 24; 34; 64) having a jointing zone having a radius of curvature equal to or less than 0.4 mm.

25. Method according to claim 24, **characterised in that** said step c) is preceded and/or followed by the step of moving said cutting head (T1; T2) along one or more directions contained in the plane of the surface to be removed.

26. Method according to claim 24, **characterised in that** in said step a) said tool (U1) with a cutting head (T1) has its rotational axis (X1) substantially coincident with the middle plane of the rim (1; 100) and in a position inside the rim (1; 100).

27. Method according to claim 24, **characterised in that** in said step a) said tool (U2) with a cutting head (T2) has its rotational axis (X2) on a plane substantially parallel to the middle plane of the rim (1; 100) and in a lateral position outside said rim (1; 100).

28. Method according to claim 24, **characterised in that** said tool (U1) has the cutting head (T1) with a cylindrical shape.

29. Method according to claim 24, **characterised in that** said tool (U2) has the cutting head (T2) with a bevelled frusto-conical shape.

## Patentansprüche

1. Felge (1) für ein Fahrradrad (W; W'), ausgebildet aus einem ringförmigen Profil, deren Schnitt einen unteren Steg (2; 42) und Seitenwände (4, 5) umfasst, wobei der untere Steg (2; 42) oder die Seitenwände (4, 5) entlang der ringförmigen Ausdehnung Speichenanbringzonen (9), in denen Aufnahmen (6) für das Anbringen von Speichen (19; 19') angeordnet sind und die eine vorgegebene Dicke (S2; S4; S6) aufweisen, und Infraspeichenzonen (8), die zwischen den Speichenanbringzonen (9) platziert sind und eine geringere Dicke (S1; S2; S3) aufweisen als die Dicke (S2; S4; S6) der Speichenanbringzonen (9), aufweisen, **dadurch gekennzeichnet, dass** eines von der Zunahme der Dicke zwischen einer Infraspeichenzone (8) und der angrenzenden Speichenanbringzone (9) oder der Abnahme der Dicke zwischen einer Speichenanbringzone (9) und der angrenzenden Infraspeichenzone (8) eine sehr scharfe Stufung und eine scharfe Ecke (14, 11; 24; 34; 64) aufweist, wobei die scharfe Ecke (14, 11; 24; 34; 64) eine Verbindungszone mit einem Krümmungsradius aufweist, der 0,4 mm entspricht oder geringer ist.

2. Felge (1) nach Anspruch 1, **dadurch gekennzeichnet, dass** sowohl die Zunahme der Dicke zwischen der Infraspeichenzone (8) und der angrenzenden Speichenanbringzone (9) als auch die Verringerung der Dicke zwischen der Speichenanbringzone (9) und der angrenzenden Infraspeichenzone (8) eine sehr scharfe Stufung und eine scharfe Ecke (14, 11; 24; 34; 64) aufweisen.

3. Felge (1) nach Anspruch 1, **dadurch gekennzeichnet, dass** die Speichenanbringzone (9) und die Infraspeichenzone (8) zu dem unteren Steg (2; 42) gehören.

4. Felge (1) nach Anspruch 1, **dadurch gekennzeichnet, dass** die scharfe Ecke (14, 11; 24; 34) durch einen ersten Abschnitt (12; 22; 32; 62), der zu der Innenfläche (8a) der Infraspeichenzone (8) gehört, und durch einen zweiten Abschnitt (13; 23; 33; 63), der den ersten Abschnitt (12; 22; 32; 62) schneidet, gebildet wird.

5. Felge (1) nach Anspruch 1 oder 4, **dadurch gekennzeichnet, dass** die scharfe Ecke (14, 11; 24; 64) eine Verbindungszone mit einem Krümmungsradius aufweist, der 0,2 mm entspricht oder geringer ist.

6. Felge (1) nach Anspruch 4, **dadurch gekennzeichnet, dass** der erste Abschnitt (12; 22; 32; 62) oder der zweite Abschnitt (13; 23; 33; 63) geradlinig ist.

7. Felge (1) nach Anspruch 4, **dadurch gekennzeichnet, dass** der erste Abschnitt (12; 22; 32; 62) oder der zweite Abschnitt (13; 23; 33; 63) krummlinig ist.

8. Felge (1) nach Anspruch 4, **dadurch gekennzeichnet, dass** der erste Abschnitt (12; 22; 32; 62) krummlinig ist und einen Krümmungsradius aufweist, der im Wesentlichen dem Radius des unteren Stegs der Felge entspricht, und der zweite Abschnitt (13; 23; 33; 63) geradlinig ist.

9. Felge (1) nach Anspruch 4, **dadurch gekennzeichnet, dass** der zweite Abschnitt (13; 23; 33) mit dem ersten Abschnitt (12; 22; 32) einen im Wesentlichen rechten Winkel ausbildet.

10. Felge (1) nach Anspruch 4, **dadurch gekennzeichnet, dass** der zweite Abschnitt (63) mit dem ersten Abschnitt (62) einen spitzen Winkel ausbildet.

11. Felge (1) nach Anspruch 3, **dadurch gekennzeichnet, dass** die Zunahme der Dicke oder die Verringerung der Dicke wenigstens an einem Teil der Breite (L) des unteren Stegs (2; 42) vorhanden ist.

12. Felge (1) nach Anspruch 3, **dadurch gekennzeichnet, dass** die Zunahme der Dicke oder die Verringerung der Dicke auf der gesamten Breite (L) des unteren Stegs (2; 42) vorhanden ist.

13. Felge (1) nach Anspruch 1, **dadurch gekennzeichnet, dass** die Verringerung der Dicke zwischen der Speichenanbringzone (9) und der angrenzenden Infraspeichenzone (8) oder die Zunahme der Dicke zwischen der Infraspeichenzone (9) und der angrenzenden Speichenanbringzone (8) eine graduelle Stufung aufweist.

14. Felge (1) nach Anspruch 3, **dadurch gekennzeichnet, dass** sich die Zunahme der Dicke oder die Verringerung der Dicke entlang der Breite (L) des unteren Stegs (2; 42) gemäß geradlinigen Abschnitten (14, 11) erstreckt.

15. Felge (1) nach Anspruch 14, **dadurch gekennzeichnet, dass** die geradlinigen Abschnitte (14, 11) zu den Seitenwänden (4, 5) der Felge (1) im Wesentlichen senkrecht sind.

16. Felge (1) nach Anspruch 14, **dadurch gekennzeichnet, dass** die geradlinigen Abschnitte in Bezug auf die Seitenwände (4, 5) der Felge (1) schräg sind.

17. Felge (1) nach Anspruch 3, **dadurch gekennzeichnet, dass** sich die Zunahme der Dicke oder die Verringerung der Dicke entlang der Breite (L) des unteren Stegs (2; 42) gemäß krummlinigen Abschnitten (70, 71; 80, 81) erstreckt.

18. Felge (1) nach Anspruch 17, **dadurch gekennzeichnet, dass** die krummlinigen Abschnitte in Bezug auf die Aufnahme (6) konkav (70, 71) sind.

19. Felge (1) nach Anspruch 17, **dadurch gekennzeichnet, dass** die krummlinigen Abschnitte in Bezug auf die Aufnahme (6) konvex (80, 81) sind.

20. Felge (1) nach Anspruch 1, **dadurch gekennzeichnet, dass** sie außerdem einen oberen Steg (3; 43) mit ringförmiger Ausdehnung umfasst, der mit den Seitenwänden (4, 5) verbunden ist und geeignet ist, mit den Seitenwänden (4, 5) und dem unteren Steg (2; 42) wenigstens eine Kammer (15) für das Anbringen der Speichen (19; 19') zu bilden.

21. Felge (1) nach einem der vorhergehenden Ansprüche, **dadurch gekennzeichnet, dass** die Infraspeichenzonen (8) mit verringerter Dicke durch Entfernen von Material mit Maschinenwerkzeugen erzielt werden.

22. Felge (1) nach Anspruch 21, **dadurch gekennzeichnet, dass** die Maschinenwerkzeuge Fräser sind.

23. Fahrradrad (W; W'), umfassend eine Felge (1), die nach einem der vorhergehenden Ansprüche hergestellt ist.

24. Verfahren zum Ausbilden von Zonen (8) verringerter Dicke (S1; S3; S5) in dem unteren Steg (2) oder in den Seitenwänden (4, 5) einer Felge (1; 100) eines Fahrradrades (W; W') mit einem ringförmigen Profil, **dadurch gekennzeichnet, dass** es die folgenden Schritte umfasst:
a) Drehen des Schneidkopfes (T1; T2) mit einem scharfen Kantenprofil eines Werkzeuges (U1; U2);
b) Bewegen des Schneidkopfes (T1; T2) zu dem unteren Steg (2; 102) hin oder zu der Seitenwand (4, 5) hin gemäß einer Ebene, die im Wesentlichen zu seiner Oberfläche senkrecht ist;
c) Bewegen des Schneidkopfes (T1; T2) entlang einer ringförmigen Richtung und Entfernen von Material;
d) Bewegen des Schneidkopfes (T1; T2) von dem unteren Steg (2; 102) oder der Seitenwand (4, 5) weg;
wobei die Schritte auf der Oberfläche des unteren Stegs (2; 102) oder der Seitenwand (4, 5) wenigstens eine scharfe Ecke (14, 11; 24; 34; 64) bilden, die eine Verbindungszone mit einem Krümmungsradius aufweist, der 0,4 mm entspricht oder geringer ist.

25. Verfahren nach Anspruch 24, **dadurch gekennzeichnet, dass** dem Schritt c) der Schritt des Bewegens des Schneidkopfes (T1; T2) entlang einer Richtung oder mehrerer Richtungen, die in der Ebene der zu entfernenden Oberfläche enthalten ist oder sind, vorausgeht und/oder sich an diesen anschließt.

26. Verfahren nach Anspruch 24, **dadurch gekennzeichnet, dass** in dem Schritt a) das Werkzeug (U1) mit einem Schneidkopf (T1) seine Drehachse (X1) im Wesentlichen mit der Mittelebene der Felge (1; 100) übereinstimmend und in einer Position innerhalb der Felge (1; 100) aufweist.

27. Verfahren nach Anspruch 24, **dadurch gekennzeichnet, dass** in dem Schritt a) das Werkzeug (U2) mit einem Schneidkopf (T2) seine Drehachse (X2) auf einer Ebene im Wesentlichen parallel zu der Mittelebene der Felge (1; 100) und in einer seitlichen Position außerhalb der Felge (1; 100) aufweist.

28. Verfahren nach Anspruch 24, **dadurch gekennzeichnet, dass** das Werkzeug (U1) den Schneidkopf (T1) mit einer zylindrischen Form aufweist.

29. Verfahren nach Anspruch 24, **dadurch gekennzeichnet, dass** das Werkzeug (U2) den Schneidkopf (T2) mit einer abgeschrägten kegelstumpfförmigen Form aufweist.

## Revendications

1. Jante (1) pour une roue de bicyclette (W ; W') formée d'un profil annulaire, dont la section comprend un pont inférieur (2 ; 42) et des parois latérales (4, 5), le pont inférieur (2 ; 42) ou les parois latérales (4, 5) comprenant, le long de l'extension annulaire, une zone de fixation de rayons (9) dans laquelle des supports (6) sont agencés pour la fixation de rayons (19 ; 19'), ayant une épaisseur prédéterminée (S2 ; S4; S6) et les zones entre les rayons (8), placées entre ladite zone de fixation de rayons (9), ayant une épaisseur (S1 ; S2 ; S3) inférieure à l'épaisseur (S2 ; S4 ; S6) de ladite zone de fixation de rayons (9), **caractérisée en ce que** l'une de l'augmentation de l'épaisseur entre une zone entre les rayons (8) et la zone adjacente de fixation de rayon (9) ou la diminution de l'épaisseur entre une zone de fixation de rayon (9) et la zone adjacente entre les rayons (8) comporte une progression très vive et un angle vif (14, 11 ; 24 ; 34 ; 64), ledit angle vif (14, 11 ; 24 ; 34 ; 64) comportant une zone de jonction ayant un rayon de courbure inférieur ou égal à 0.4 mm.

2. Jante (1) selon la revendication 1, **caractérisée en ce que** l'augmentation de l'épaisseur entre ladite zone entre les rayons (8) et ladite zone adjacente de fixation de rayon (9) et la réduction de l'épaisseur entre ladite zone de fixation de rayon (9) et ladite zone adjacente entre les rayons (8) comportent une progression très vive et un angle vif (14, 11 ; 24 ; 34 ; 64).

3. Jante (1) selon la revendication 1, **caractérisée en ce que** ladite zone de fixation de rayon (9,) et ladite zone entre les rayons (8) appartiennent audit pont inférieur (2 ; 42).

4. Jante (1) selon la revendication 1, **caractérisée en ce que** ledit angle vif (14, 11; 24 ; 34) est défini par une première partie (12 ; 22 ; 32 ; 62) appartenant à la surface intérieure (8a) de ladite zone entré les rayons (8) et par une seconde partie (13 ; 23 ; 33 ; 63) qui croise ladite première partie (12 ; 22 ; 32 ; 62).

5. Jante (1) selon la revendication 1 ou 4, **caractérisée en ce que** ledit angle vif (14, 11, 24 ; 64) comprend une zone de jonction ayant un rayon de courbure inférieur ou égal à 0,2 mm.

6. Jante (1) selon la revendication 4, **caractérisée en ce que** ladite première partie (12 ; 22; 32 ; 62) ou ladite seconde partie (13 ; 23 ; 33 ; 63) est rectiligne.

7. Jante (1) selon la revendication 4, **caractérisée en ce que** ladite première partie (12 ; 22 ; 32 ; 62) ou ladite seconde partie (13 ; 23 ; 33 ; 63) est curviligne.

8. Jante (1) selon la revendication 4, **caractérisée en ce que** ladite première partie (12 ; 22 ; 32 ; 62) est curviligne avec un rayon de courbure sensiblement égal au rayon du pont inférieur de la jante, et ladite seconde partie (13 ; 23 ; 33 ; 63) est rectiligne.

9. Jante (1) selon la revendication 4, **caractérisée en ce que** ladite seconde partie (13 ; 23 ; 33) forme avec ladite première partie (12 ; 22 ; 32) un angle sensiblement droit.

10. Jante (1) selon la revendication 4, **caractérisée en ce que** ladite seconde partie (63) forme avec ladite première partie (62) un angle aigu.

11. Jante (1) selon la revendication 3, **caractérisée en ce que** ladite augmentation de l'épaisseur ou ladite réduction de l'épaisseur est présente sur au moins une partie de la largeur (L) dudit pont inférieur (2 ; 42).

12. Jante (1) selon la revendication 3, **caractérisée en ce que** ladite augmentation de l'épaisseur ou ladite réduction de l'épaisseur est présente sur la totalité de la largeur (L) dudit pont inférieur (2 ; 42).

13. Jante (1) selon la revendication 1, **caractérisée en ce que** la réduction de l'épaisseur entre ladite zone de fixation de rayon (9) et la zone adjacente entre les rayons (8) ou l'augmentation de l'épaisseur entre ladite zone entre les rayons (9) et la zone adjacente de fixation de rayon (8) a une progression régulière.

14. Jante (1) selon la revendication 3, **caractérisée en ce que** ladite augmentation de l'épaisseur ou ladite réduction de l'épaisseur s'étend le long de la largeur (L) dudit pont inférieur (2 ; 42) selon des parties rectilignes (14, 11).

15. Jante (1) selon la revendication 14, **caractérisée en ce que** lesdites parties rectilignes (14, 11) sont sensiblement perpendiculaires auxdites parois latérales (4, 5) de la jante (1).

16. Jante (1) selon la revendication 14, **caractérisée en ce que** lesdites parties rectilignes sont obliques par rapport auxdites parois latérales (4, 5) de la jante (1).

17. Jante (1) selon la revendication 3, **caractérisée en ce que** ladite augmentation de l'épaisseur ou ladite réduction de l'épaisseur s'étend le long de la largeur (L) dudit pont inférieur (2 ; 42) selon des parties curvilignes (70, 71 ; 80, 81).

18. Jante (1) selon la revendication 17, **caractérisée en ce que** lesdites parties curvilignes sont concaves (70, 71) par rapport audit support (6).

19. Jante (1) selon la revendication 17, **caractérisée en ce que** lesdites parties curvilignes sont convexes (80, 81) par rapport audit support (6).

20. Jante (1) selon la revendication 1, **caractérisée en ce qu'**elle comprend également un pont supérieur (3 ; 43) avec une extension annulaire raccordée auxdites parois latérales (4, 5) et approprié pour définir, avec lesdites parois latérales (4, 5) et ledit pont inférieur (2 ; 42), au moins une chambre (15) pour la fixation des rayons (19 ; 19').

21. Jante (1) selon l'une quelconque des revendications précédentes, **caractérisée en ce que** lesdites zones entre les rayons (8) avec une épaisseur réduite sont obtenues par le retrait de matière avec des machines-outils.

22. Jante (1) selon la revendication 21, **caractérisée en ce que** lesdites machines-outils sont des fraises.

23. Roue de bicyclette (W; W') comprenant une jante (1) fabriquée selon l'une quelconque des revendications précédentes.

24. Procédé de formation de zones (8) d'épaisseur réduite (S1 ; S3 ; S5) dans le pont inférieur (2) ou dans les parois latérales (4, 5) d'une jante (1 ; 100) d'une roue de bicyclette (W; W') ayant un profil annulaire, **caractérisée en ce qu'**il comprend les étapes suivantes :
a) rotation de la fraise rotative (T1 ; T2), avec un profil en angle vif, d'un outil (U1 ; U2) ;
b) déplacement de ladite fraise rotative (T1 ; T2) vers ledit pont inférieur (2 ; 102) ou vers ladite paroi latérale (4, 5) selon un plan sensiblement perpendiculaire à sa surface ;
c) déplacement de ladite fraise rotative (T1 ; T2) le long d'une direction annulaire et retrait de la matière ;
d) déplacement de ladite fraise rotative (T1 ; T2) en éloignement dudit pont inférieur (2 ; 102) ou de ladite paroi latérale (4, 5) ;
lesdites étapes définissant, sur la surface dudit pont inférieur (2 ; 102) ou ladite paroi latérale (4, 5), au moins un angle vif (14, 11 ; 24 ; 34 ; 64) ayant une zone de jonction ayant un rayon de courbure inférieur ou égal à 0,4 mm.

25. Procédé selon la revendication 24, **caractérisé en ce que** ladite étape c) est précédée et/ou suivie de l'étape de déplacement de ladite fraise rotative (T1 ; T2) le long d'une ou plusieurs directions contenues dans le plan de la surface qui doit être retirée.

26. Procédé selon la revendication 24, **caractérisé en ce que** dans ladite étape a), ledit outil (U1) avec une fraise rotative (T1) a son axe de rotation (X1) sensiblement coïncidant avec le plan médian de la jante (1 ; 100) et dans une position à l'intérieur de la jante (1 ; 100).

27. Procédé selon la revendication 24, **caractérisé en ce que** dans ladite étape a), ledit outil (U2) avec une fraise rotative (T2) a son axe de rotation (X2) sur un plan sensiblement parallèle au plan médian de la jante (1 ; 100) et dans une position latérale à l'extérieur de ladite jante (1 ; 100).

28. Procédé selon la revendication 24, **caractérisée en ce que** ledit outil (U1) comprend la fraise rotative (T1) avec une forme cylindrique.

29. Procédé selon la revendication 24, **caractérisé en ce que** ledit outil (U2) comprend la fraise rotative (T2) avec une forme tronconique biseautée.
